# EUROPÄISCHE PATENTSCHRIFT

(11) **EP 2 104 466 B1**
(45) Veröffentlichungstag und Bekanntmachung des Hinweises auf die Patenterteilung: **06.11.2013**
(21) Anmeldenummer: 07856470.5
(22) Anmeldetag: 07.12.2007
(51) Int. Cl.: A61C 17/22

(54) **ZAHNBÜRSTE SOWIE AUFSATZTEIL HIERFÜR**
TOOTHBRUSH AND ATTACHMENT THEREFOR
BROSSE À DENTS ET PARTIE EMBOUT ASSOCIÉE

(30) Priorität: 18.12.2006 DE 102006060132
(43) Veröffentlichungstag der Anmeldung: 30.09.2009
(73) Patentinhaber: Braun GmbH, 61476 Kronberg/Taunus (DE)
(72) Erfinder: KRESSNER, Gerhard, 63674 Altenstadt (DE)
(74) Vertreter: Schneider, Stefan Michael
(86) Internationale Anmeldenummer: PCT/EP2007/010674
(87) Internationale Veröffentlichungsnummer: WO 2008/074412

(56) Entgegenhaltungen:
- WO-A-00/76420
- DE-A1- 19 508 932
- US-A- 4 811 445
- US-A- 5 054 149
- US-A- 5 213 434
- US-A- 5 289 604
- US-A1- 2004 255 409
- US-B1- 6 367 108
- US-B1- 6 766 548

## Beschreibung

Die vorliegende Erfindung betrifft eine vorzugsweise elektrische Zahnbürste mit einem Handteil sowie einem darauf aufsetzbaren Aufsatzteil. Die Erfindung betrifft dabei insbesondere das Aufsatzteil für eine solche Zahnbürste, gemäß Anspruch 1.

Aus der EP 0 500 537 B1 ist eine elektrische Zahnbürste bekannt, bei der die Aufsatzbürste einerseits mit einem stirnseitigen Schaftteil des Zahnbürstenhandteils und andererseits mit einer daraus vorspringenden Antriebswelle verbunden wird. Die Aufsatzbürste weist hierzu radial federnde Rasthaken auf, die an entsprechenden handteilseitigen Rastausnehmungen verriegelbar sind.

Aus der DE 103 52 993 A1 ist weiterhin eine elektrische Zahnbürste bekannt, bei der die Aufsatzbürste nur direkt an der stirnseitig aus dem Zahnbürstenhandteil vorspringenden Antriebswelle befestigt ist. Die Aufsatzbürste weist hierzu ein Anschlussstück mit einer sacklochartigen Innenausnehmung auf, in die eine insgesamt hülsenförmige Aufnahme eingesetzt ist. Die besagte Aufnahme, in die die Antriebswelle passgenau einsteckbar ist, weist dabei mehrere Federelemente auf, die radial federnd ausgebildet sind und eine spielfreie Verbindung zwischen der Aufsatzbürste und der Antriebswelle sicherstellen sollen.

Das Dokument EP6766548 offenbart noch eine weitere Ausführungsform eines Aufsatzteils für elektrische Zahnbürsten.

Bei Befestigung des Aufsatzteils an dem stirnseitig vorspringenden Gehäusestumpf des Zahnbürstenhandteils ist es auch bekannt, das rohrförmige Anschlussstück des Aufsatzteils einfach so fest auf den Stumpf aufzuschieben, bis es dort reibschlüssig festklemmt. Um hier ein Lösen der Verbindung durch die Vibrationen des Antriebs der elektrischen Zahnbürste und die Putzkräfte zu vermeiden, darf jedoch nur eine sehr schwache Konizität verwendet werden, um eine Selbsthemmung der Klemmung zu erreichen. Andererseits wäre es wünschenswert, an dem Stumpf bzw. dem Hals des Zahnbürstenhandteils bzw. hierzu komplementär an dem Aufsatzteil eine stärkere Konizität vorzusehen, um eine toleranzunempfindlichere Verbindung erreichen zu können.

Hiervon ausgehend liegt der vorliegenden Erfindung die Aufgabe zugrunde, eine verbesserte Zahnbürste sowie ein verbessertes Aufsatzteil hierfür zu schaffen, die Nachteile des Standes der Technik vermeiden und letzteren in vorteilhafter Weise weiterbilden. Insbesondere soll eine einfach zu kuppelnde Verbindung zwischen dem Aufsatzteil und dem Zahnbürstenhandteil geschaffen werden, die toleranzunempfindlich ist, die Aufsatzbürste vorzugsweise spielfrei auf dem Zahnbürstenhandteil hält und doch in einfacher Weise zu lösen und wieder herzustellen ist.

Erfindungsgemäß wird diese Aufgabe durch ein Aufsatzteil gemäß Anspruch 1 sowie eine Zahnbürste gemäß Anspruch 16 gelöst. Bevorzugte Ausgestaltungen der Erfindung sind Gegenstand der abhängigen Ansprüche.

Es wird also vorgeschlagen, zwischen zumindest einem Teil des Kupplungseinsatzes und dem rohrförmigen Anschlussstück des Aufsatzteils bzw. einem damit verbundenen Eingriffsabschnitt eine axiale Relativbewegung in Richtung der Aufsatzteillängsachse zuzulassen und diese axiale Relativbewegung in eine Entriegelungs- bzw. Verriegelungsbewegung des Kupplungseinsatzes quer zur Aufsatzteillängsrichtung umzusetzen. Hierdurch kann einerseits eine feste, auch gegenüber Vibrationen unempfindliche Verbindung zwischen dem Aufsatzteil und dem Zahnbürstenhandteil erreicht werden, andererseits kann weiterhin ein Lösen der Verbindung bzw. ein Herstellen der Verbindung durch die an sich bekannte axiale Steck- bzw. Abziehbewegung erreicht werden. Erfindungsgemäß ist der Kupplungseinsatz des Aufsatzteils relativ zu dessen Anschlussstück und/oder einem damit verbundenen Betätigungsstück axial in Aufsatzteillängsrichtung verschiebbar sowie mit dem Eingriffsabschnitt, der mit dem Zahnbürstenhandteil form- bzw. reibschlüssig verriegelbar ist, derart verbunden, dass eine axiale Bewegung des Kupplungseinsatzes relativ zum Anschlussstück und/oder dem Betätigungsstück eine Entriegelungs- und/oder Verriegelungsbewegung des Eingriffsabschnitts quer zur Aufsatzteillängsrichtung erzeugt. Ist der Kupplungseinsatz bzw. der Eingriffsabschnitt mit dem Zahnbürstenhandteil verriegelt, muss zunächst das Aufsatzteil bzw. ein damit verbundenes Betätigungsstück axial im wesentlichen in Aufsatzteillängsrichtung gegenüber dem verriegelten Kupplungseinsatz bewegt werden, wobei sich dieser zunächst aufgrund seiner Verriegelung an dem Zahnbürstenhandteil gegenüber letzterem nicht bewegt. Erst wenn die axiale Relativbewegung die Verriegelung gelöst hat, kann der Kupplungseinsatz von dem Zahnbürstenhandteil zusammen mit dem Aufsatzteil abgezogen werden. Dieser zweistufige Befestigungs- bzw. Verbindungsmechanismus gestattet es, an der Schnittstelle zwischen dem Zahnbürstenhandteil und dem Kupplungseinsatz auch nicht selbsthemmende Verbindungs- bzw. Passungskonturen vorzusehen, da eine Fixierung trotzdem durch die quer zur Aufsatzteillängsrichtung erfolgende Verriegelungsbewegung sichergestellt ist. Hierdurch kann insbesondere die in dieser Hinsicht sonst problematische Schnittstelle zwischen Zahnbüstenhandteil und Kupplungseinsatz des Aufsatzteils toleranzunempfindlich gemacht werden. Andererseits kann die axiale Relativbeweglichkeit zwischen Kupplungseinsatz und Aufsatzteil bzw. daran befestigtem Betätigungsstück durch eine geeignete Konturanpassung an der Schnittstelle zwischen Kupplungseinsatz und Anschlussstück bzw. Betätigungsstück gesteuert werden, insbesondere kann ein ungewolltes axiales Verschieben des Anschlussstücks gegenüber dem Kupplungseinsatz durch eine selbsthemmende Ausbildung der aufeinander sitzenden Konturen des Kupplungseinsatzes und des Anschlussstücks erreicht werden.

Insbesondere kann der Kupplungseinsatz eine sich vom Arbeitskopf des Aufsatzteils weg erweiternde, konische Aufnahme definieren, die einen Schrägungswinkel von mehr als 7° aufweist und dementsprechend nicht mehr selbsthemmend ausgebildet ist, wobei in entsprechender Weise das üblicherweise stirnseitig vorspringende, stumpfförmige Verbindungsstück des Zahnbürstenhandteils in entsprechender Weise konisch mit einem Schrägungswinkel von mehr als 7° ausgebildet sein kann. Durch diese relativ starke Konizität des Verbindungsstücks des Zahnbürstenhandteils und der von dem Kupplungseinsatz definierten Aufnahme wird die Verbindung toleranzunempfindlich, da ein etwaiger Durchmesserunterschied durch eine entsprechende Axialbewegung kompensiert werden kann.

Um andererseits das Problem des ungewollten Lösens nicht an die Schnittstelle zwischen Kupplungseinsatz und Anschlussstück des Aufsatzteils zu verlagern, d.h. eine ungewollte axiale Verschiebung des rohrförmigen Anschlussstücks des Aufsatzteils gegenüber dem Kupplungseinsatz zu vermeiden, welches ein Lösen der Verriegelung des Kupplungseinsatzes zur Folge hätte, können grundsätzlich verschiedene Maßnahmen ergriffen werden, beispielsweise kann eine Verrastung zwischen dem Kupplungseinsatz und dem Anschlussstück des Aufsatzteils vorgesehen sein, die nur durch Überwindung einer vorgegebenen Rastkraft überwunden werden kann. Alternativ oder zusätzlich kann das Anschlussstück auch eine Einsatzaufnahme besitzen, in die der Kupplungseinsatz passgenau und selbsthemmend reibschlüssig einsetzbar ist, beispielsweise kann die Einsatzaufnahme konisch mit einem Schrägungswinkel von weniger als 7° ausgebildet sein, so dass sich der Kupplungseinsatz beim Aufstecken des Aufsatzteils auf das Zahnbürstenhandteil selbsthemmend in der Einsatzaufnahme des rohrförmigen Anschlussstücks festklemmt. Weiterhin alternativ oder zusätzlich kann zwischen dem Kupplungseinsatz und dem Anschlussstück eine Federeinrichtung wirken, die den Kupplungseinsatz in der gewünschten axialen Stellung hält.

Um eine einfache Bedienung des Aufsatzteils zu erreichen und wie bislang das Aufsatzteil einfach von dem Zahnbürstenhandteil abziehen zu können, ist in Weiterbildung der Erfindung vorgesehen, dass das Betätigungsstück einen Entriegelungsabschnitt besitzt, der derart angeordnet und ausgebildet ist, dass bei einer Axialbewegung des Kupplungseinsatzes von dem Arbeitskopf weg der Entriegelungsabschnitt mit dem Kupplungseinsatz in Eingriff bringbar ist und dessen Eingriffsabschnitt in eine entriegelte Stellung zwingt. Mit anderen Worten ist das Betätigungsstück derart angeordnet und ausgebildet, dass das Betätigungsstück beim Abziehen des Aufsatzteils vom Zahnbürstenhandteil den Kupplungseinsatz automatisch entriegelt.

Nach einer bevorzugten Ausführung der Erfindung kann an dem Eingriffsabschnitt des Kupplungseinsatzes und/oder dem Betätigungsstück eine Keilfläche vorgesehen sein, die beim Auflaufen des Eingriffsabschnitts auf das Betätigungsstück die gewünschte Entriegelungsbewegung erzeugt. Dabei kann ein ebenes Keilflächenpaar vorgesehen sein, jedoch auch ein ballig oder konkav gewölbtes Schrägflächenpaar Verwendung finden, welches beim Auflaufen des Eingriffsabschnitts auf das Betätigungsstück in Folge der axialen Relativbewegung letztere in eine Entriegelungsbewegung quer zur Axialrichtung umsetzt.

In kinematischer Umkehrung kann grundsätzlich auch vorgesehen sein, dass das Betätigungsstück nicht die Entriegelung, sondern die Verriegelung des Kupplungseinsatzes bzw. des damit verbundenen Eingriffsabschnitts bewirkt. In diesem Fall kann der Eingriffsabschnitt in seiner Ausgangsstellung eine nicht verriegelnde Stellung einnehmen bzw. in diese vorgespannt sein. Wird das Aufsatzteil auf das Zahnbürstenhandteil aufgesetzt, wird über das Betätigungsstück der Eingriffsabschnitt des Kupplungseinsatzes in seine verriegelnde Stellung gezwungen. Bevorzugt ist jedoch die zuvor beschriebene Ausführung der Erfindung, wonach der Kupplungseinsatz selbstverriegelnd ausgebildet ist und die beim Aufsetzen auf das Zahnbürstenhandteil von selbst erfolgende Verriegelung mittels des Betätigungsstücks beim erneuten Abziehen dann gelöst wird.

In besonders vorteilhafter Ausführung der Erfindung kann der Eingriffsabschnitt einen Schnapper und/oder einen Rastklips bilden, der beim Aufstecken des Anschlussstücks auf das Zahnbürstenhandteil über dessen Verbindungsstück gleitet, dabei elastisch wegfedert und bei Erreichen der gänzlich aufgesteckten Stellung formschlüssig einschnappt. Soll das Aufsatzteil vom Zahnbürstenhandteil wieder abgenommen werden, wird der Schnapper bzw. Rastklips durch eine axiale Relativbewegung zwischen dem Betätigungsstück und dem Kupplungseinsatz aus seiner eingeschnappten Stellung ausgehoben.

Der Eingriffsabschnitt kann dabei grundsätzlich verschieden ausgebildet sein. Nach einer vorteilhaften Ausführung der Erfindung kann der Eingriffsabschnitt eine Rastkontur insbesondere in Form eines Rasthakens aufweisen, die am auskragenden Ende eines Eingriffsfingers vorgesehen ist, der vorteilhafterweise federnd ausgebildet und/oder um eine Querachse schwenkbar ist und von dem Betätigungsstück radial bewegbar ist. Vorteilhafterweise kann der zumindest eine Eingriffsfinger dabei integral einstückig am Korpus des Kupplungseinsatzes angeformt und gegenüber dem restlichen Korpus beispielsweise durch längsschlitzförmige Ausnehmungen getrennt sein, um gegenüber dem restlichen Korpus federn zu können.

Alternativ oder zusätzlich kann auch ein Eingriffsabschnitt in Form einer Wippe vorgesehen sein, die an ihrem einen Ende eine geeignete Rastkontur, insbesondere in Form eines Rasthakens zur Verriegelung mit dem Zahnbürstenhandteil, trägt und an ihrem anderen Ende einen Betätigungsabschnitt bildet, der mit dem vorgenannten Betätigungsstück in Eingriff bringbar ist. Auch in diesem Fall kann der Eingriffsabschnitt integral einstückig an dem Korpus des Kupplungseinsatzes angeformt sein, insbesondere über einen biegsamen Verbindungssteg im Mittelabschnitt der vorgenannten Wippe.

Alternativ oder zusätzlich kann der Eingriffsabschnitt eine Rastkontur insbesondere in Form eines Rasthakens aufweisen, der über einen Schwenkarm derart schwenkbar gelagert ist, dass bei einer Axialbewegung des Rasthakens über den Schwenkarm gleichzeitig eine radiale Bewegungskomponente erzeugt wird, welche zum Verriegeln bzw. Entriegeln des Rasthakens führt. Um die hierfür erforderliche Axialbewegung zu erzeugen, kann der Rasthaken einen Mitnehmer besitzen, der das Verbindungsstück des Zahnbürstenhandteils beim Aufstecken und/oder das Betätigungsstück beim Abziehen des Aufsatzteils einfängt.

Gemäß einer weiteren bevorzugten Ausführung der Erfindung kann der vorteilhafterweise hülsenförmige Kupplungseinsatz in Form einer geschlitzten Hülse ausgebildet sein und/oder aus mehreren Schalensegmenten bestehen, wobei die Hülsenabschnitte bzw. die mehreren Schalensegmente radial aufweitbar und zusammendrückbar bzw. -fahrbar sind, so dass die von den Hülsenabschnitten bzw. Schalensegmenten definierte Aufnahme für das Verbindungsstück des Zahnbürstenhandteils unterschiedliche Durchmesser einnehmen kann. Vorteilhafterweise können die Hülsenabschnitte bzw. die Schalensegmente in einer insgesamt konischen Einsatzausnehmung in dem Anschlussstück des Aufsatzteils sitzen, so dass die von den Hülsenabschnitten bzw. Schalensegmenten definierte Aufnahme beim axialen Verschieben des Kupplungseinsatzes in dem Anschlussstück verjüngt wird bzw. sich aufweiten kann.

Eine weitere vorteilhafte Ausführung der Erfindung kann darin bestehen, dass an dem insgesamt hülsenförmigen Kupplungseinsatz ein geschlitzter Rastring vorgesehen ist, der radial zusammenfahren und sich aufweiten kann. Ein Zusammendrücken kann hierbei durch einen konischen Sitz in dem Anschlussstück erzwungen werden oder ggf. auch durch Vorspannung des Rastrings erzielt werden, während umgekehrt ein Auseinanderfahren bzw. Aufweiten des Rastrings beispielsweise über ein Schrägflächenpaar an dem Rastring und dem Betätigungsstück erzielt werden kann.

In vorteilhafter Weiterbildung der Erfindung wird der in dem Anschlussstück axial bewegliche Kupplungseinsatz über eine Feder an dem Anschlussstück fixiert und vor dem Herausfallen gesichert und/oder in eine definierte Ausgangsstellung vorgespannt. Diese Feder kann grundsätzlich verschieden ausgebildet sein. Nach einer bevorzugten Ausführung der Erfindung ist an dem Kupplungseinsatz ein elastischer Federabschnitt angeformt, der an dem rohrförmigen Anschlussstück befestigt ist. Der elastische Federabschnitt kann hierbei insbesondere von zumindest zwei wendelförmigen und/oder spiralförmigen Federarmen gebildet sein, die sich etwa auf einer zur Kupplungseinsatzlängsachse koaxialen Hüllfläche erstrecken und mit einem Haltering verbunden sind, der mit der Innenwandung des rohrförmigen Anschlussstücks in Eingriff bringbar ist, insbesondere dort verrastbar ist. Die Feder kann dabei vorteilhafterweise auf der dem Arbeitskopf zugewandten Seite des Kupplungseinsatzes vorgesehen sein.

Alternativ oder zusätzlich zu der axial verschieblichen Lagerung des Kupplungseinsatzes in dem rohrförmigen Anschlussstück kann auch ein axial verschiebliches Betätigungsstück, insbesondere in Form eines Schiebers, vorgesehen sein, um die axiale Relativbewegung zwischen dem Kupplungseinsatz und dem Betätigungsstück zu erzielen. Der Schieber kann beispielsweise in einer Längsnut in dem rohrförmigen Anschlussstück geführt sein.

In bevorzugter Weiterbildung der Erfindung ist das Betätigungsstück jedoch unbeweglich an dem rohrförmigen Anschlussstück des Aufsatzteils fixiert. Das Betätigungsstück kann dabei grundsätzlich von einem integral angeformten Abschnitt des Anschlussstücks selbst gebildet sein. Insbesondere jedoch kann in bevorzugter Weiterbildung der Erfindung das Betätigungsstück als Ring ausgebildet sein, der in das Anschlussstück eingesetzt ist. Das Betätigungsstück kann dabei zumindest einen axial im wesentlichen in Aufsatzteillängsrichtung vorspringenden Betätigungsfinger aufweisen, durch den der Kupplungseinsatz bzw. dessen Eingriffsabschnitt quer zur Aufsatzteillängsrichtung betätigbar ist.

In Weiterbildung der Erfindung wird das Betätigungsstück in einer Doppelfunktion genutzt. Insbesondere kann das Betätigungsstück einen von der Außenseite des Aufsatzteils her sichtbaren Abschnitt aufweisen, der eine benutzerspezifische, das Aufsatzteil individualisierende Markierung aufweist, anhand derer ein jeweiliger Benutzer des Aufsatzteils "sein" Aufsatzteil erkennen kann. Insbesondere kann das Betätigungsstück in Form eines Farbrings ausgebildet sein, der zumindest abschnittsweise an der Außenseite des Anschlussstücks des Aufsatzteils sichtbar ist, insbesondere dessen stirnseitiges Ende bildet.

In weiterhin bevorzugter Weiterbildung der Erfindung ist der Kupplungseinsatz derart ausgebildet, dass er mit unterschiedlich ausgebildeten Zahnbürstenhandteilen, genauer gesagt mit unterschiedlich ausgebildeten Verbindungsstücken solcher Zahnbürstenhandteile, kuppelbar ist. Insbesondere ist der Kupplungseinsatz derart ausgebildet, dass er einerseits mit einem zylindrischen Verbindungsstück eines Zahnbürstenhandteils und andererseits mit einem konischen Verbindungsstück eines Zahnbürstenhandteils oder auch ggf. mit verschieden stark konisch ausgebildeten Verbindungsstücken kuppelbar ist. In Weiterbildung der Erfindung ist hierzu der zumindest eine Eingriffsabschnitt des Kupplungseinsatzes in einem Ausgangszustand mittels eines Soll-Bruchstücks in einer vorbestimmten Ausgangslage gegenüber dem restlichen Korpus des Kupplungseinsatzes fixiert, so dass er zusammen mit dem genannten restlichen Korpus des Kupplungseinsatzes eine Aufnahme definiert, in die ein zylindrisches und/oder leicht konisches Verbindungsstück eines ersten Zahnbürstenhandteils passgenau einsteckbar und festklemmbar ist. Wird das zumindest eine Soll-Bruchstück zerbrochen, kann der Eingriffsabschnitt radial bewegt werden, so dass ein stärker konisches Verbindungsstück eines zweiten Zahnbürstenhandteils unter Aufweiten des Eingriffsabschnitts passgenau einsteckbar ist. Vorteilhafterweise definiert der vom Eingriffsabschnitt abgesehen restliche Korpus des Kupplungseinsatzes eine Aufnahme, die an das stärker konische Verbindungsstück des zweiten Zahnbürstenhandteils formangepasst ist.

Alternativ oder zusätzlich zu einer solchen Ausbildung des Kupplungseinsatzes mit einer Soll-Bruchstelle kann die Verwendbarkeit des Aufsatzteils an unterschiedlichen Zahnbürstenhandteilen auch durch die Verwendung eines Adapters sichergestellt werden. In diesem Falle ist der Kupplungseinsatz und insbesondere die von diesem definierte Aufnahme an die stärker konische Kontur des Verbindungsstücks des vorgenannten zweiten Zahnbürstenhandteils formangepasst, so dass ein solches stärker konisches Verbindungsstück insbesondere mit einem Schrägungswinkel von mehr als 7° passgenau einsetzbar ist. Soll das Aufsatzteil hingegen für ein vorgenanntes erstes Zahnbürstenhandteil mit einem zylindrischen bzw. nur leicht konischem Verbindungsstück verwendet werden, wird auf das Verbindungsstück dieses Zahnbürstenhandteils ein hülsenförmiger Adapter aufgeschoben, dessen Außenkontur eine stärkere Konizität aufweist und insbesondere passgenau an die von dem Kupplungseinsatz definierte Aufnahme angepasst ist. Eine solche Adapterhülse wird vorteilhafterweise formschlüssig und/oder reibschlüssig auf dem Zahnbürstenhandteil verriegelt. Die Adapterhülse kann auch dazu genutzt werden, ein Aufsatzteil mit einem Kupplungseinsatz der vorgenannten Art, der einen Soll-Bruchabschnitt umfasst, auch nach Aufbrechen der Soll-Bruchstelle trotzdem noch für ein Zahnbürstenhandteil mit einem zylindrischen bzw. nur leicht konischen Verbindungsstück verwenden zu können.

Die Erfindung wird nachfolgend anhand bevorzugter Ausführungsbeispiele und zugehöriger Zeichnungen näher erläutert. In den Zeichnungen zeigen:
- Fig. 1:: einen ausschnittsweisen Längsschnitt durch eine elektrische Zahnbürste nach einer bevorzugten Ausführung der Erfindung, der das stirnseitige Verbindungsstück des Zahnbürstenhandteils und die darauf sitzende Aufsatzbürste zeigt, wobei der in dem rohrförmigen Anschlussstück der Aufsatzbürste sitzende Kupplungseinsatz in seiner verriegelten Stellung gezeigt ist,
- Fig. 2:: einen Längsschnitt durch die Zahnbürste aus Fig. 1, der gegenüber der Darstellung der Fig. 1 um 90° gedreht ist,
- Fig. 3:: einen Querschnitt durch die Zahnbürste aus den Figuren 1 und 2 im Bereich der Verrastung zwischen dem Kupplungseinsatz in der Aufsatzbürste und dem Hals des Zahnbürstenhandteils,
- Fig. 4:: ein ausschnittsweiser Längsschnitt durch eine elektrische Zahnbürste, der die Verbindung der Aufsteckbürste mit dem Handteil der Zahnbürste zeigt, wobei der Kupplungseinsatz in dem Anschlussstück der Aufsatzbürste nach einer weiteren bevorzugten Ausführung der Erfindung eine Verriegelungswippe aufweist,
- Fig. 5:: eine ausschnittsweise Schnittansicht des Kupplungseinsatzes im Anschlussstück einer Aufsatzbürste nach einer weiteren bevorzugten Ausführung der Erfindung, bei der der Kupplungseinsatz einen Verriegelungsarm in Form eines bistabil gelagerten Federfingers aufweist,
- Fig. 6:: eine Draufsicht auf den bistabil gelagerten Federfinger des Kupplungseinsatzes aus Fig. 5,
- Fig. 7:: eine ausschnittsweise Schnittansicht des Kupplungseinsatzes in dem Anschlussstück einer Aufsatzbürste nach einer weiteren bevorzugten Ausführung der Erfindung, bei der ein an einem Schwenkarm gelagerter Rasthaken vorgesehen ist,
- Fig. 8:: einen Längsschnitt durch den Kupplungseinsatz in dem Anschlussstück einer Aufsatzbürste nach einer weiteren bevorzugten Ausführung der Erfindung, bei der der Kupplungseinsatz in Form einer geteilten, zwei Schalensegmente aufweisenden Hülse ausgebildet ist,
- Fig. 9:: einen Draufsicht auf den Kupplungseinsatz aus Fig. 8, der die beiden Schalensegmente des hülsenförmigen Kupplungseinsatzes zeigt,
- Fig. 10:: einen Längsschnitt durch den Kupplungseinsatz in dem Anschlussstück einer Aufsatzbürste nach einer weiteren bevorzugten Ausführung der Erfindung, bei der der Kupplungseinsatz einen radial aufweitbaren und verjüngbaren Rastring aufweist,
- Fig. 11:: einen ausschnittsweisen Längsschnitt durch eine elektrische Zahnbürste nach einer weiteren bevorzugten Ausführung der Erfindung, bei der der Kupplungseinsatz in dem Anschlussstück der Aufsatzbürste eine Soll-Bruchstelle aufweist und ohne Zerbrechen der Soll-Bruchstelle für ein Zahnbürstenhandteil mit einem zylindrischen Verbindungsstück geeignet ist, wie dies Fig. 11 zeigt, und nach Zerbrechen der Soll-Bruchstelle für ein Zahnbürstenhandteil mit einem konischen Verbindungsstück geeignet ist, wobei Fig. 11 den noch unzerbrochenen Zustand der Soll-Bruchstellen zeigt,
- Fig. 12:: einen ausschnittsweisen Längsschnitt durch die Zahnbürste aus Fig. 11 in einer gegenüber Fig. 11 um 90° gedrehten Ebene,
- Fig. 13:: einen Querschnitt durch die Verbindung zwischen der Aufsatzbürste und dem Handteil der Zahnbürste aus den Figuren 11 und 12 im Bereich der Rasthaken des Kupplungseinsatzes, und
- Fig. 14:: eine perspektivische Ansicht des Kupplungseinsatzes der Aufsatzbürste aus den Figuren 11 bis 13.

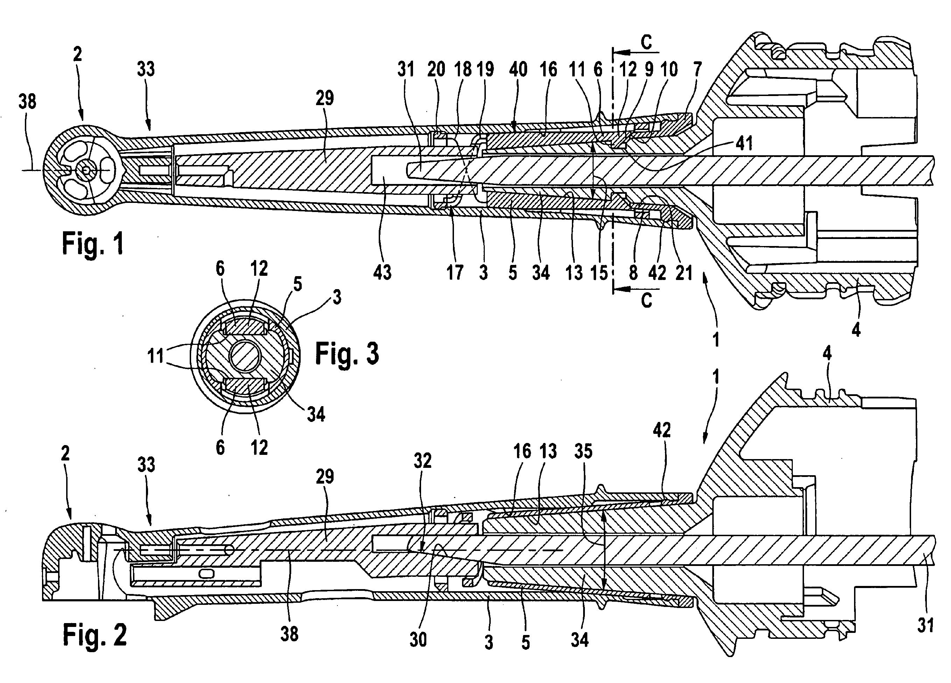

Die in den Figuren 1 bis 3 gezeigte Zahnbürste 1 umfasst ein Handteil 4 sowie ein damit verbundenes Aufsatzteil in Form einer Aufsatzbürste 33. Das Handteil 4 umfasst in an sich bekannter Weise ein Gehäuse, in dem ein Antriebsmotor und eine Energieversorgungseinrichtung, beispielsweise in Form eines Akkus, aufgenommen sind und an dem ein Betätigungsschalter zum Ein- und Ausschalten des Antriebs vorgesehen ist. An dem in Figur 1 gezeigten stirnseitigen Ende des Handteils 4 bildet das Gehäuse des Handteils 4 ein stirnseitig vorspringendes, stumpfförmiges Verbindungsstück 34, das in der gezeichneten Ausführungsform konisch ausgebildet ist und sich zu seinem freien Ende hin verjüngt, wobei die konische Kontur des Verbindungsstücks 34 vorteilhafterweise einen Schrägungswinkel 35 von mehr als 7° besitzt und somit nicht selbsthemmend klemmbar ist. Aus dem genannten Verbindungsstück 34 tritt stirnseitig eine Antriebswelle 36 heraus, die rotatorisch oszillierend antreibbar ist.

Die Aufsatzbürste 33 umfasst einen Arbeitskopf 2 mit einem nicht näher dargestellten Borstenfeld, das in der gezeichneten Ausführung um eine etwa in Borstenlängsrichtung weisende Borstenfeldachse rotatorisch oszillierend antreibbar ist. Der besagte Arbeitskopf 2 wird von einem insgesamt rohrförmigen Anschlussstück 3 getragen, das auf den Hals bzw. das Verbindungsstück 34 des Zahnbürstenhandteils 4 aufsteckbar ist. Im Inneren des genannten rohrförmigen Anschlussstücks 3 umfasst die Aufsatzbürste 33 eine Aufsteckwelle 29, die mit der handteilseitigen Antriebswelle 31 drehfest kuppelbar ist.

Zur Befestigung der Aufsatzbürste 33 an dem Handteil 4 ist in dem rohrförmigen Anschlussstück 3 ein Kupplungseinsatz 5 in Form einer Kupplungshülse vorgesehen, die in dem rohrförmigen Anschlussstück 3 axial in Richtung der Aufsatzteillängsrichtung 38 verschieblich aufgenommen ist. Das Anschlussstück 3 bildet hierbei mit seiner Innenwandung eine Einsatzaufnahme 16, in der der Kupplungseinsatz 5 zumindest in seinem verriegelten Zustand, der noch näher beschrieben wird, passgenau sitzt. Die Einsatzaufnahme 16 kann dabei grundsätzlich verschieden ausgebildet sein, beispielsweise insgesamt zylindrisch oder insgesamt kegelig bzw. konisch ausgebildet sein, oder auch einen zylindrischen Abschnitt sowie einen konischen Abschnitt aufweisen. In der gezeichneten Ausführung ist die Einsatzaufnahme 16 insgesamt leicht konisch ausgebildet, wobei an ihrem für das innere Ende des Kupplungseinsatzes 5 bestimmten Bereich 40 ein zylindrischer Abschnitt vorgesehen ist.

Der Kupplungseinsatz 5 ist dabei durch eine Feder 17 axial in dem Anschlussstück 3 gehalten bzw. in eine vorbestimmte Ausgangslage vorgespannt. Die besagte Feder 17 ist dabei vorteilhafterweise auf der dem Arbeitskopf 2 zugewandten Seite des Kupplungseinsatzes 5 vorgesehen und einerseits mit besagtem Kupplungseinsatz 5 verbunden und andererseits an dem Anschlussstück 3 fixiert. In der gezeichneten Ausführungsform umfasst die Feder 17 hierzu einen Haltering 20, der an der Innenwandung des Anschlussstücks 3 verrastet ist. Die Feder 17 kann grundsätzlich verschieden ausgebildet sein. Gemäß der gezeichneten Ausführungsform umfasst die Feder 17 vorteilhafterweise zwei wendel- oder spiralförmige Federabschnitte 18 und 19, die sich um die Aufsteckwelle 29 sowie die Antriebswelle 31 herumwinden, vgl. Figur 1 und Figur 2. Die Federabschnitte 18 und 19 sind dabei integral einstückig an den Kupplungseinsatz 5 angeformt sowie mit dem Haltering 20 verbunden. Die Feder 17 lässt eine Axialbewegung des Kupplungseinsatzes 5 in dem erforderlichen Maße zu, um die Verriegelung und Entriegelung zu gestatten.

Der hülsenförmige Kupplungseinsatz 5 bildet mit seiner Innenmantelfläche eine Aufnahme 13, die an die Außenumfangskontur des Verbindungsstücks 34 des Zahnbürstenhandteils 4 formangepasst ist, so dass letzteres passgenau in die Aufnahme 13 einsetzbar ist. Die Aufnahme 13 ist hierzu insgesamt konisch ausgebildet, wobei der Schrägungswinkel der entsprechenden Konizität - angepasst an das Verbindungsstück 34 - mehr als 7° beträgt. Der Kupplungseinsatz 5 weist dabei zwei einander gegenüberliegende Eingriffsabschnitte 6 in Form von federnd ausgebildeten Kupplungs- bzw. Federfingern 12 auf, die integral einstückig an den restlichen Korpus des Kupplungseinsatzes 5 angeformt sind und gegenüber letzterem durch U-förmige, schlitzförmige Einschnitte abgetrennt sind, so dass Eingriffsfinger 12 radial quer zur Aufsatzteillängsrichtung 38 auf- und zufedern können. Die Eingriffsfinger 12 erstrecken sich dabei mit ihrer Längsachse im wesentlichen parallel zu der Aufsatzteillängsrichtung 38.

Wie Figur 1 zeigt, tragen die Eingriffsfinger 12 an ihren freien Enden radial nach innen vorspringende Rasthaken 11, die in daran formangepasste Rastausnehmungen 41 in der Außenmantelfläche des Verbindungsstücks 34 des Zahnbürstenhandteils 4 einrasten können. Es versteht sich, dass hier auch andere, geeignete Rastkonturen vorgesehen sein könnten, beispielsweise eine geometrische Umkehrung der gezeichneten Ausführung mit Rastvorsprüngen an dem Verbindungsstück 34 und Rastausnehmungen an den Eingriffsfingern 12.

Wie Figur 3 zeigt, sind das Verbindungsstück 34 und die von dem Kupplungseinsatz 5 definierte Aufnahme 13 im Querschnitt nicht kreisförmig ausgebildet, sondern jeweils flachgedrückt. Insbesondere besitzt das Verbindungsstück 34 zwei einander gegenüberliegende Abflachungen, im Bereich derer die Rastausnehmungen 41 vorgesehen sind. Die Eingriffsfinger 12 sind mit ihrer Innenseite komplementär zu den beiden Abflachungen und der darin vorgesehenen Rastausnehmungen 41 ausgebildet.

Um die in Figur 1 gezeigte Verriegelung zwischen dem Kupplungseinsatz 5 und dem Verbindungsstück 34 des Zahnbürstenhandteils 4 lösen zu können, ist an dem Anschlussstück 3 der Aufsatzbürste 33 ein Betätigungsstück 7 in Form eines Ringes vorgesehen, der in der gezeichneten Ausführung am dem Arbeitskopf 2 abgewandten stirnseitigen Ende des rohrförmigen Anschlussstücks 3 sitzt. Der Ring kann hierbei vorteilhafterweise als Farbring ausgebildet sein, so dass er die Doppelfunktion erfüllt, die Aufsatzbürste 33 zu individualisieren, so dass ein jeweiliger Benutzer "seine" Aufsatzbürste an der Farbe des Betätigungsstücks 7 erkennt.

Das Betätigungsstück 7 umfasst dabei zwei Entriegelungsabschnitte 8 jeweils in Form eines axial in Aufsatzteillängsrichtung nach innen in das Anschlussstück 3 hinein vorspringenden Betätigungsfingers 21. Diese Betätigungsfinger 21 greifen dabei vorteilhafterweise in die von dem Kupplungseinsatz 5 gebildete Aufnahme 13 hinein, und zwar im Bereich der freien Enden der Eingriffsfinger 12. Dabei sind an den vorspringenden Enden der Betätigungsfinger 21 Schrägflächen 10 vorgesehen, die dazu bestimmt sind, mit Schrägflächen an den vorspringenden Enden der Eingriffsfinger 12 des Kupplungseinsatzes 5 zusammenzuwirken. Die Schrägflächen 9 und 10 sind dabei derart ausgebildet, dass beim axialen Auflaufen der Eingriffsfinger 12 auf die Betätigungsfinger 21 die Eingriffsfinger 12 radial nach außen gespreizt werden, so dass sie aus den Rastausnehmungen 41 in dem Verbindungsstück 34 des Zahnbürstenhandteils 4 herausgehoben werden.

In der gezeichneten Ausführung ist zur Erzeugung der Axialbewegung der Kupplungseinsatz 5 in dem Anschlussstück 3 axial verschiebbar. Alternativ oder zusätzlich könnte auch das ringförmige Betätigungsstück 7 in dem Anschlussstück 3 axial verschiebbar sein. In der bevorzugten, gezeichneten Ausführung jedoch sitzt das Betätigungsstück 7 durch eine Verrastung 42 an der Innenwandung des Anschlussstückes 3 fest an dem Anschlussstück 3.

### Damit ergibt sich folgende Funktion:

Beim Aufstecken der Aufsatzbürste 33 auf das Zahnbürstenhandteil 4 fädelt das Verbindungsstück 34 in die Aufnahme 13 des Kupplungseinsatzes 5 ein, wobei die Rasthaken 11 unter Aufspreizung der Eingriffsfinger 12 über die Außenmantelfläche des Verbindungsstückes 34 hinweggleiten. Bei Erreichen der gänzlich aufgeschobenen Stellung federn die Eingriffsfinger 12 radial nach innen, so dass die Rasthaken 11 in den Rastausnehmungen 41 einschnappen. Der Kupplungseinsatz 5 bildet einen Schnapper, der sich beim Aufschieben auf das Zahnbürstenhandteil 4 automatisch an diesem verriegelt. In der verriegelten Stellung sitzt das Verbindungsstück 34 passgenau in der konischen Aufnahme 13. Ebenso ist der Kupplungseinsatz 5 passgenau in der Einsatzausnehmung 16 des Anschlussstücks 3 aufgenommen.

Um die formschlüssige Verriegelung zu lösen, braucht lediglich die Aufsatzbürste 33 in Aufsatzteillängsrichtung 38 von dem Zahnbürstenhandteil 4 abgezogen werden. Hierbei kommt es zunächst zu einer axialen Relativbewegung des Anschlussstücks 3 gegenüber dem Kupplungseinsatz 5, da letzterer durch die Rasthaken 11 axial fest an dem Zahnbürstenhandteil 4 gehalten wird. Durch diese axiale Relativbewegung fahren die Betätigungsfinger 21 des Betätigungsstücks 7 unter die Eingriffsfinger 12 bzw. die Rasthaken 11, so dass die Eingriffsfinger 12 über das Schrägflächenpaar 9 und 10 radial aus den Rastausnehmungen 41 herausgehoben werden. Bei der axialen Relativbewegung zwischen dem Kupplungseinsatz 5 und dem Anschlussstück 3 kommt es zu einer entsprechenden Verformung der Federabschnitte 18 und 19 der Feder 17.

Sind die Eingriffsfinger 12 mit ihren Rasthaken 11 gegenüber dem Zahnbürstenhandteil 4 entriegelt, wird der Kupplungseinsatz 5 zusammen mit dem Anschlussstück 3 von dem Handteil 4 abgezogen. Durch die Feder 17 stellt sich der Kupplungseinsatz 5 dabei in seine Ausgangsstellung zurück. Diese Federrückstellung ist zwar vorteilhaft, jedoch nicht zwangsweise nötig. Durch die konische Ausbildung der Aufnahme 13 und/oder einen ggf. vorgesehenen Mitnehmer würde der Kupplungseinsatz 5 beim erneuten Aufstecken auf das Zahnbürstenhandteil 4 auch ohne die Feder 17 in seine verriegelnde Stellung zurückgeschoben werden.

Wie insbesondere Figur 2 zeigt, wird auch die Aufsteckwelle 29 der Aufsatzbürste 33 in der gezeichneten Ausführung mit der handteilseitigen Antriebswelle 31 durch konische Passflächen gekuppelt und die Antriebswelle 31 ist an ihrem aus dem Gehäuse des Handteils 4 herausschauenden Ende konisch ausgebildet, wobei ein Schrägungswinkel ebenfalls mehr als 7° betragen kann. Die Aufsteckwelle 29 besitzt eine daran formangepasste, stirnseitig offene, vorteilhafterweise sacklochförmige Aufnahme 43, die eine an die Konizität der Antriebswelle 31 angepasste Passfläche 32 umfasst, die ebenfalls einen Schrägungswinkel von mehr als 7° besitzt. Durch das feste Aufstecken der Aufsatzbürste 33 kann eine form- und/oder reibschlüssige Verbindung zwischen der Aufsteckwelle 29 und der Antriebswelle 31 erzielt werden. Die Verbindung kann dabei frei von axial wirksamen Schnappverbindungen oder anderweitigen axialen Haltemitteln ausgebildet sein.

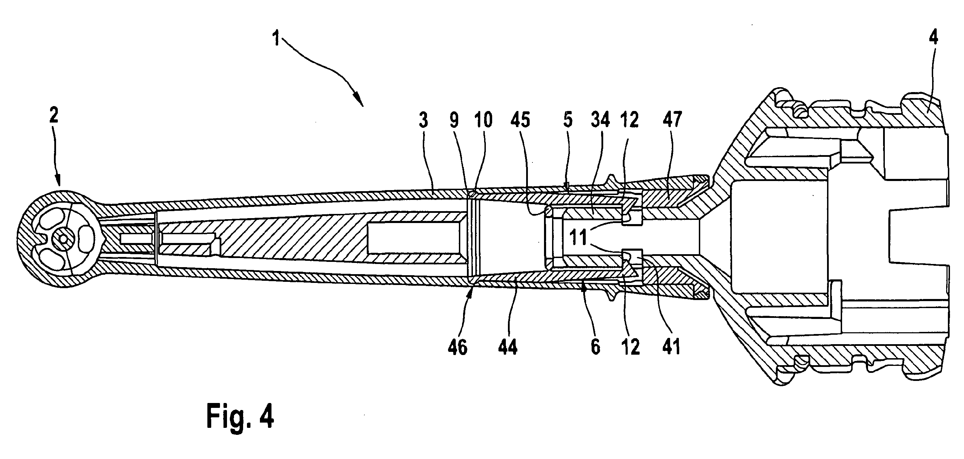

Gemäß einer anderen Ausführung der Erfindung, die Figur 4 zeigt, muss die Entriegelung des Kupplungseinsatzes 5 gegenüber dem Zahnbürstenhandteil 4 nicht an den freien Enden der Eingriffsfinger 12 und auch nicht durch ein Betätigungsstück in Form eines stirnseitig eingesetzten Ringes erfolgen. Wie Figur 4 zeigt, können die Eingriffsabschnitte 6 des Kupplungseinsatzes 5 vorteilhafterweise in Form einer Wippe 44 ausgebildet sein. Dabei sind in ähnlicher Weise wie bei der zuvor beschriebenen Ausführung der Figuren 1 bis 3 an dem hülsenförmigen Kupplungseinsatz 5 sich in Längsrichtung erstreckende Eingriffsfinger 12 vorgesehen, die radial nach außen bzw. innen federn können und an ihren freien Enden in entsprechender Weise Rasthaken 11 tragen. Die Eingriffsfinger 12 sind dabei jedoch in einem mittleren Abschnitt über ein Gelenk 45 jeweils schwenkbar gegenüber dem restlichen Korpus des hülsenförmigen Kupplungseinsatzes 5 gelagert, wobei das Gelenk 45 vorteilhafterweise durch einen biegsamen Verbindungsabschnitt gebildet sein kann, der die genannten Eingriffsfinger 12 mit dem restlichen Korpus des Kupplungseinsatzes 5 verbindet. Die Eingriffsfinger 12 ragen dabei über die Gelenke 45 axial hinaus und tragen an ihren den Rasthaken 11 abgewandten Enden Schrägflächen 9, die mit Schrägflächen 10 an der Innenwandung des Anschlussstückes 3 zusammenwirken. Die Schrägflächen 9 und 10 bilden dabei gleichzeitig Rastmittel 46, mittels derer der Kupplungseinsatz 5 an dem Anschlussstück 3 verrastbar ist. Wie Figur 4 zeigt, sind die Schrägflächen 9 an den Wippen 44 Teil eines radialen Vorsprungs, der in eine Umfangsnut in der Innenwandung des Anschlussstücks 3 einrasten kann.

Damit ergibt sich folgende Funktion: Soll die Aufsatzbürste 33 aus der in Figur 4 gezeigten verriegelten Stellung von dem Zahnbürstenhandteil 4 entriegelt werden, wird einfach die Aufsatzbürste 33 in Aufsatzteillängsrichtung 38 vom Handteil 4 abgezogen. Hierbei kommt es zunächst zu einer axialen Relativbewegung des Anschlussstücks 3 gegenüber dem Kupplungseinsatz 5, da letzterer durch die Rasthaken 11 fest an dem Zahnbürstenhandteil 4 gehalten wird. Hierdurch gleiten die Rastmittel 46 aus ihrer eingerasteten Stellung, wobei über die Schrägflächen 9 und 10 die Wippen 44 betätigt werden, so dass die Eingriffsfinger 12 um die Gelenke 45 schwenken und die Rasthaken 11 aus den Rastausnehmungen 41 herausgehebelt werden. Nach Entriegelung der Rasthaken 11 kann sodann der Kupplungseinsatz 5 zusammen mit dem Anschlussstück 3 abgezogen werden. Durch den stirnseitig in das Anschlussstück 3 eingesetzten Farbring 47 wird dabei verhindert, dass der Kupplungseinsatz 5 vollends aus dem Anschlussstück 3 herausrutscht.

Beim erneuten Aufstecken der Aufsatzbürste 33 auf das Zahnbürstenhandteil 4 fädelt zunächst das Verbindungsstück 34 in die von dem Kupplungseinsatz 5 gebildete Aufnahme 13 ein, wobei die Rasthaken 11 über das Verbindungsstück 34 gleiten. Wie Figur 4 zeigt, sind im Bereich der Gelenke 45 radial nach innen vorspringende Absätze vorgesehen, die einen Mitnehmer bilden. Beim Aufstecken stoßen an diesen Mitnehmer die entsprechenden stirnseitigen Flächen des Verbindungsstücks 34 des Handteils 4 an, so dass gewährleistet ist, dass beim vollständigen Aufstecken der Kupplungseinsatz 5 ganz in das Anschlussstück 3 hineingedrückt wird, bis die Rastmittel 46 an den Wippen 44 wieder einrasten und dementsprechend die Eingriffsfinger 12 zurückschnappen, um die Rasthaken 11 in die Rastausnehmungen 41 einzurasten.

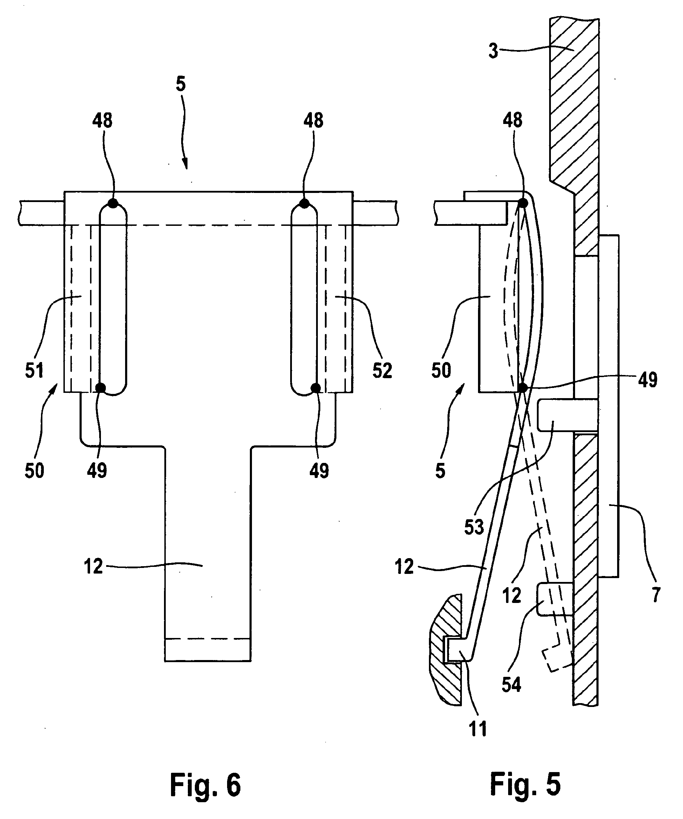

Die Figuren 5 und 6 zeigen eine weitere bevorzugte Ausführung der Erfindung, bei der der Kupplungseinsatz 5 einen bistabil gelagerten, federnden Eingriffsfinger 12 aufweist, der entsprechend den vorherigen Ausführungen an seinem freien Ende einen Rasthaken 11 trägt, der in eine entsprechende Rastausnehmung am Zahnbürstenhandteil 4 einrastet. Soweit die in den Figuren 5 und 6 gezeigte Ausführung dabei den vorhergehenden Ausführungen entspricht, wird auf deren Beschreibung verwiesen.

Wie die Figuren 5 und 6 zeigen, ist der Eingriffsfinger 12 an zwei in axialer Richtung voneinander beabstandeten Abschnitten 48 und 49 an einem Zuganker 50 in Form zweier rechts und links von dem Eingriffsfinger 12 angeordneten Zugbändern 51 und 52 angelenkt, und zwar derart, dass der Abstand der beiden Anlenkpunkte an den Abschnitten 48 und 49 kürzer ist als die Bogenlänge des Eingriffsfingers 12 zwischen diesen beiden Anlenkpunkten. Hierdurch ist der Eingriffsfinger 12 gezwungen, eine bogenförmig gekrümmte Stellung einzunehmen, und zwar entweder die in Figur 5 mit durchgezogenen Strichen dargestellte Verriegelungsstellung oder die mit gestrichelten Linien dargestellte Entriegelungsstellung. Der Abschnitt des Eingriffsfingers 12 zwischen den vorgenannten Abschnitten 48 und 49 bildet ein Druckband. Die gesamte Anordnung entspricht sozusagen einem Knackfrosch, der bistabil zwischen zwei Stellungen hin- und hergedrückt werden kann.

Zur Betätigung des Eingriffsfingers 12 ist dabei im Bereich der Innenwandung des Anschlussstückes 3 ein Betätigungsstück 7 mit einer vorspringenden Betätigungsnase 53 vorgesehen, die bei entsprechender Axialbewegung den nach außen vorspringenden Bauch des in der Verriegelungsstellung befindlichen Eingriffsfingers 12 radial nach innen drücken kann, um den Eingriffsfinger 12 in die entriegelte Stellung zu zwingen. In der gezeichneten Ausführung ist dabei das Betätigungsstück 7 in Form eines axial gegenüber dem Anschlussstück 3 verschieblichen Schiebers ausgebildet. Es versteht sich jedoch auch, dass ggf. ein axial festes Betätigungsstück 7 vorgesehen werden kann. Die Rückstellung in die wieder verriegelte Stellung kann hierbei durch eine zweite Betätigungsnase 54 an der Innenseite des Anschlussstücks 3 bewirkt werden, die beispielsweise auf den in der entriegelten Stellung nach außen weisenden freien Endabschnitt des Eingriffsfingers 12 einwirkt, vgl. Figur 5. Auch bei dieser Ausführung kann vorteilhafterweise der Kupplungseinsatz 5, der insgesamt hülsenförmig ausgebildet ist und in dem Anschlussstück 3 sitzt, gegenüber dem Anschlussstück 3 axial verschiebbar gelagert sein.

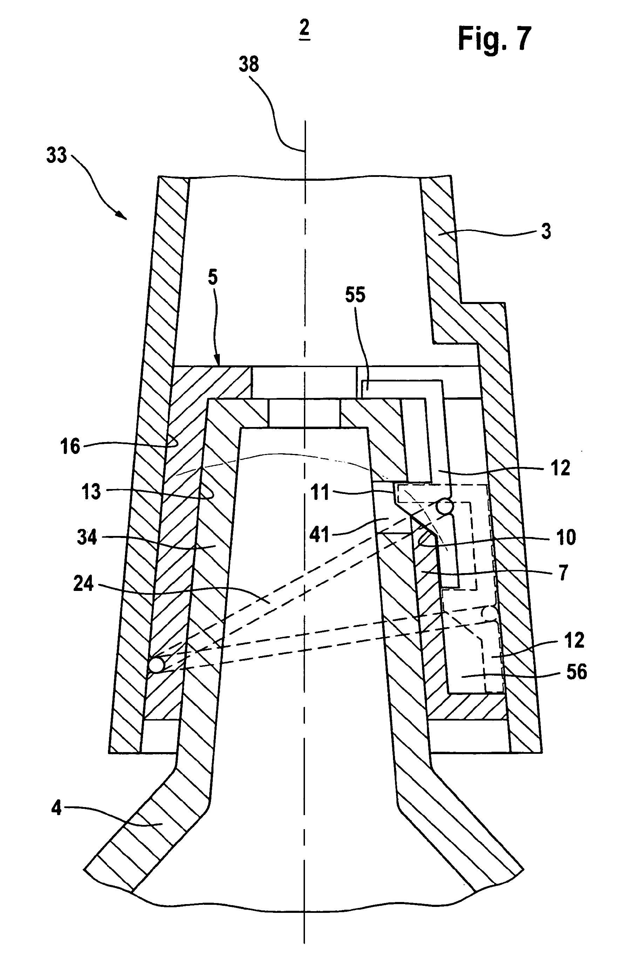

Eine weitere bevorzugte Ausführung zeigt Figur 7, wobei der Kupplungseinsatz 5 auch hier vorteilhafterweise insgesamt in Form einer Hülse ausgebildet ist, die in dem Anschlussstück 3 sitzt. Einsatzaufnahme 16 des Anschlussstücks 3, in dem der Kupplungseinsatz 5 sitzt und/oder die Aufnahme 13 des Kupplungseinsatzes 5 für das Zahnbürstenhandteil 4 können dabei in der zuvor beschriebenen Weise vorteilhafterweise konisch ausgebildet sein.

Ein Eingriffsfinger 12 mit einem radial nach innen vorspringenden Rasthaken 11 ist dabei in der in Figur 7 gezeichneten Ausführung vorteilhafterweise über einen Schwenkarm 24 an dem Korpus des Kupplungseinsatzes 5 angelenkt, und zwar derart, dass der Eingriffsfinger 12 beim Zurückschwenken vom Arbeitskopf 2 weg radial nach außen bewegt wird, während er umgekehrt beim Einschwenken auf den Arbeitskopf 2 zu radial nach innen bewegt wird. Der Eingriffsfinger 12 läuft dabei vorteilhafterweise in einer Längsnut in dem Korpus des Kupplungseinsatzes 5. Wie Figur 7 zeigt, besitzt der Eingriffsfinger 12 dabei an seinem dem Arbeitskopf 2 zugewandten Ende einen Mitnehmer 55, der beim Aufstecken der Aufsatzbürste 33 auf das Handteil 4 mit dem stirnseitigen Ende des Verbindungsstücks 34 des Zahnbürstenhandteils 4 zusammenwirkt. Wird das besagte Verbindungsstück 34 in die Aufnahme 13 des Kupplungseinsatzes 5 hineingesteckt, nimmt der Mitnehmer 55 zwangsweise den Eingriffsfinger 12 mit und bewegt diesen axial in die Ausnehmung des Anschlussstücks 3 auf den Arbeitskopf 2 zu mit. Hierdurch wird der Eingriffsfinger 12 in seine verriegelte Stellung gezwungen, die in Figur 7 mit durchgezogenen Linien dargestellt ist. Der Rasthaken 11 ist dabei in die entsprechende Rastausnehmung 41 am Zahnbürstenhandteil 4 eingerastet.

Soll die Aufsatzbürste 33 entriegelt werden, muss sie lediglich in Aufsatzteillängsrichtung 38 von dem Zahnbürstenhandteil 4 abgezogen werden. Hierdurch gleitet die Schrägfläche 10 des Betätigungsstückes 7 an der Schrägfläche 9 des Eingriffsfingers 12 ab, wodurch der Eingriffsfinger 12 radial nach außen gedrückt und der Rasthaken 11 entriegelt wird und somit letztlich auch der Eingriffsfinger 12 von dem Zahnbürstenhandteil 4 abgezogen werden kann. Wie Figur 7 zeigt, ist hierzu der Eingriffsfinger 12 in einer Tasche 56 zwischen dem Kupplungseinsatz 5 und dem Anschlussstück 3 aufgenommen, so dass er ausreichend weit radial ausfahren kann, um aus der Rastausnehmung am Zahnbürstenhandteil ausrücken zu können.

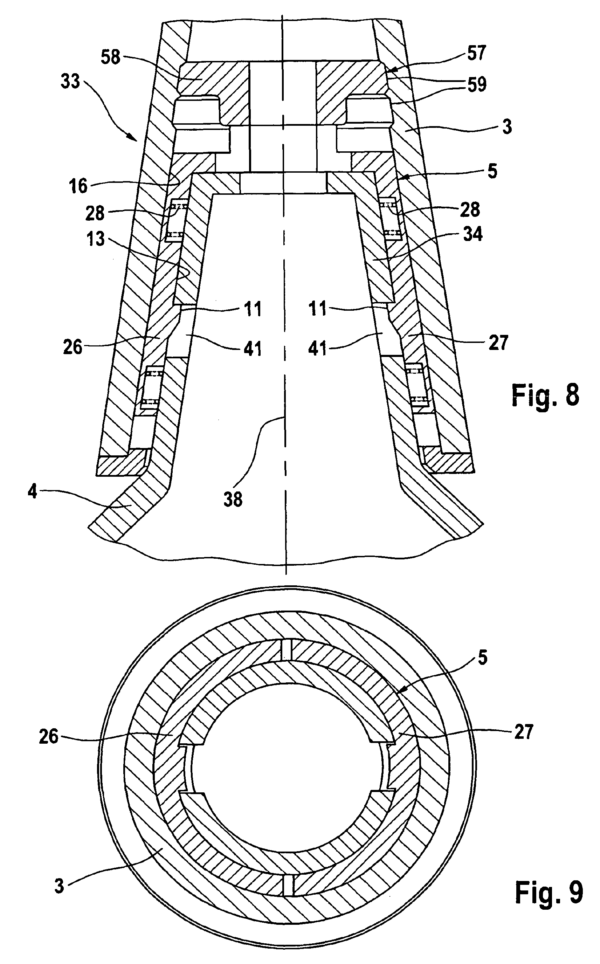

Eine weitere Ausführung der Erfindung zeigen die Figuren 8 und 9. Hierbei ist der Kupplungseinsatz 5 in Form einer geschlitzten Hülse ausgebildet, so dass zwei jeweils etwa halbschalenförmige Schalensegmente 26 und 27 mit ihrer Innenwandung die Aufnahme 13 definieren, in die das Verbindungsstück 34 des Zahnbürstenhandteils 4 passgenau einsetzbar ist. Figur 9 zeigt dabei die Teilung der beiden Schalensegmente 26 und 27 voneinander. Die beiden Schalensegmente 26 und 27 sind dabei sowohl an ihrer Innenseite als auch an ihrer Außenseite konisch ausgebildet. Die Aufnahme 13 ist dementsprechend konisch und an das ebenfalls konische Verbindungsstück 34 formangepasst; ebenso ist die Einsatzausnehmung 16 des Anschlussstückes 3 der Aufsatzbürste 33 konisch.

An ihrer Innenmantelfläche umfassen die Schalensegmente 26 und 27 jeweils Haken 11, mit denen sie formschlüssig in die Rastausnehmungen 41 am Handteil 4 einrasten.

Um das Verriegeln und Entriegeln zu ermöglichen, ist der Kupplungseinsatz 5 axial verschieblich in dem Anschlussstück 3 gelagert. Wie Figur 8 zeigt, erfolgt dies in der gezeichneten Ausführung über eine Verrastung 57, die zwischen zwei axial voneinander beabstandeten Raststellungen hin- und herbewegbar ist. Es versteht sich jedoch, dass hier ggf. auch andere Lagermöglichkeiten, beispielsweise mittels einer Feder, einem Reib-Schiebesitz oder dergleichen, möglich wären. In der gezeichneten Ausführung sind die beiden Schalensegmente 26 und 27 an einem Rastelement 58 in Form eines Rastringes befestigt, der umfangsseitig in Rastausnehmungen 59 an dem Anschlussstück 3 gehalten wird. Hierdurch ergibt sich folgende Funktion:

Soll die Aufsatzbürste 33 aus der in Figur 8 gezeigten Verriegelungsstellung in dem Zahnbürstenhandteil 4 entriegelt werden, muss die Aufsatzbürste 33 lediglich in Aufsatzteillängsrichtung 38 vom Handteil 4 abgezogen werden. Hierbei verbleibt zunächst der Kupplungseinsatz 5 axial fest an dem Zahnbürstenhandteil 4, da die Rasthaken 11 noch im Eingriff sind, wodurch es zu einer axialen Relativbewegung zwischen dem Kupplungseinsatz 5 und dem Anschlussstück 3 kommt. Hierbei wird das Rastelement 58 in die vom Arbeitskopf 2 weiter beabstandete Rastausnehmung 59 bewegt. Durch diese axiale Relativbewegung erhält gleichzeitig der Kupplungseinsatz 5 durch die Konizität der Einsatzausnehmung 16 radial mehr Luft, so dass die Schalensegmente 26 und 27 quer zur Aufsatzteillängsrichtung 38 auseinanderfahren können. Um diese Auseinanderbewegung sicherzustellen, ist in der gezeichneten Ausführung eine Federeinrichtung 28 vorgesehen, die die Schalensegmente 26 und 27 in ihre aufgeweitete Stellung vorspannt. In der gezeichneten Ausführung umfasst die Federeinrichtung 28 an den Schalensegmenten 26 und 27 innenumfangsseitig angeordnete Federelemente, die sich auf dem Zahnbürstenhandteil 4 abstützen.

Beim erneuten Wiederaufsetzen der Aufsatzbürste 33 fädelt das Verbindungsstück 34 des Zahnbürstenhandteils 4 in die Aufnahme 13 ein, bis Mitnehmer 55 an den Schalensegmenten 26 und 27 mit dem Verbindungsstück 34 in Eingriff gelangen, wodurch beim weiteren Einschieben des Zahnbürstenhandteils 4 der Kupplungseinsatz 5 tiefer in das Anschlussstück 3 hineingedrückt wird. Das Rastelement 58 wird dabei wieder in die näher beim Anschlusskopf 3 befindliche Rastausnehmung bewegt. Gleichzeitig fahren hierdurch die Schalensegmente 26 und 27 zusammen, so dass die Haken 11 wieder in die Rastausnehmungen 41 eingreifen.

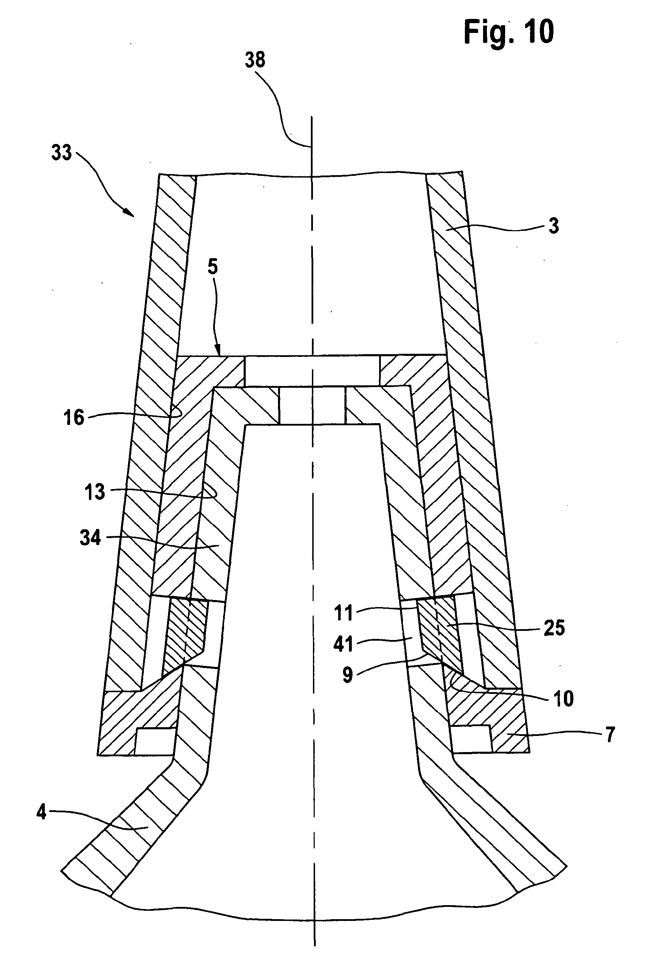

Eine weitere vorteilhafte Ausführung der Erfindung zeigt Figur 10. Auch hier umfasst der Kupplungseinsatz 5 einen insgesamt hülsenförmigen, konischen Korpus, der mit seiner Innenseite eine konische Aufnahme 13 für das Verbindungsstück 34 des Zahnbürstenhandteils 4 bildet und mit seiner Außenseite in der ebenfalls konischen Einsatzausnehmung 16 in dem Anschlussstück 3 sitzt. Bei einer anderen Ausführung können der Korpus, die Aufnahme und die Einsatzazsnehmung nicht konisch sondern zylindrisch ausgestaltet sein. Weiterhin umfasst der Kupplungseinsatz 5 einen Rastring 25, der einerseits radial aufweitbar und verjüngbar ist und gegenüber der Innenkontur des hülsenförmigen Korpus des Kupplungseinsatzes 5 vorspringen kann. Andererseits kann der Rastring 25 gegenüber dem Anschlussstück 3 axial beweglich sein. Er umfasst zudem eine Schrägfläche 9, die mit einer entsprechenden Schrägfläche 10 an dem Betätigungsstück 7 zusammenwirkt, welches wiederum in Form eines Ringes an dem stirnseitigen Ende des rohrförmigen Anschlussstücks 3 sitzt und dort axial fest fixiert ist. Durch axiales Auflaufen des Rastringes 25 auf das Betätigungsstück 7 wird der Rastring 25 über das Schrägflächenpaar 9 und 10 radial aufgeweitet, wodurch die Verriegelung gelöst werden kann. Damit ergibt sich folgende Funktion: Soll die Aufsatzbürste 33 von dem Handteil 4 entriegelt werden, wird die Aufsatzbürste 33 lediglich in Aufsatzteillängsrichtung 38 vom Zahnbürstenhandteil 4 abgezogen, wobei zunächst der Rastring 25 axial fest an dem Handteil 4 verbleibt, solange der Rastring 25 in der Rastausnehmung 41 im Eingriff ist. Über das Schrägflächenpaar 9 und 10 wird er jedoch mit zunehmendem axialen Abziehen des Anschlussstücks 3 aufgeweitet, bis er schließlich aus der Rastausnehmung 41 ausgerastet ist und zusammen mit dem Anschlussstück 3 vom Zahnbürstenhandteil 4 abgezogen werden kann. Vorteilhafterweise ist der Rastring 25 dabei elastisch in seine verjüngte, verriegelnde Stellung, beispielsweise nach Art eines Sprengrings, vorgespannt, so dass er sich von selbst in seine verriegelnde Stellung zurückstellt. Beim erneuten Aufsteckten der Aufsatzbürste 33 gleitet der Rastring 25 unter elastischer Aufweitung über das Verbindungsstück 34 des Zahnbürstenhandteils 4, bis er in dessen Rastausnehmungen 41 einrasten kann.

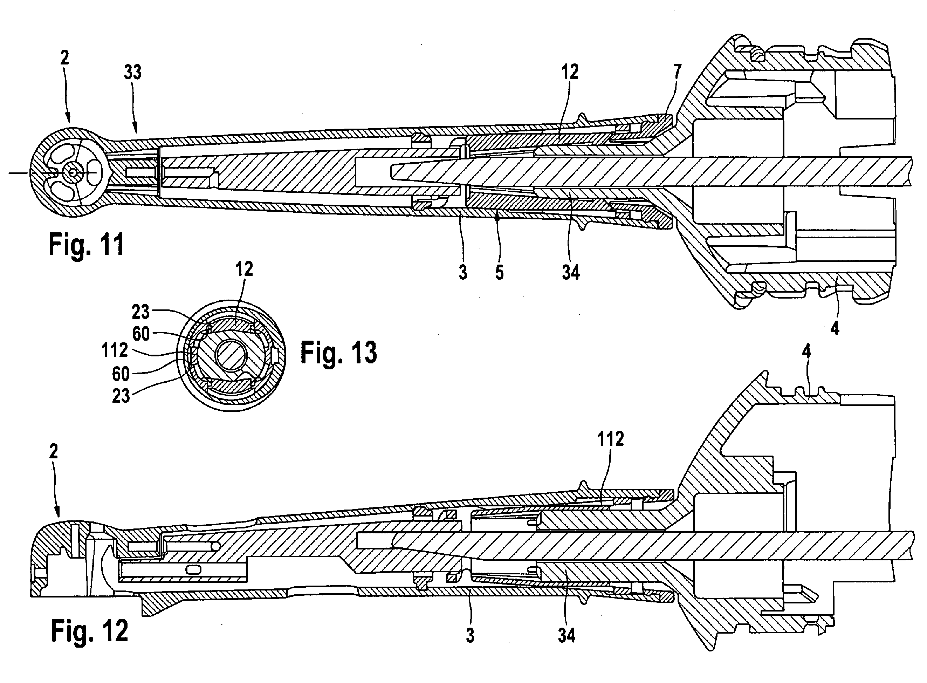

Die Figuren 11 bis 14 zeigen eine vorteilhafte Ausführung der Erfindung, die grundsätzlich ähnlich der Ausführung nach den Figuren 1 bis 3 ist. Der Kupplungseinsatz 5 ist hierbei jedoch derart ausgebildet, dass er sowohl auf ein stärker konisch ausgebildetes Zahnbürstenhandteil 11 aufsteckbar ist als auch auf einem zylindrischen Verbindungsstück 34 eines entsprechenden Zahnbürstenhandteils 4 hält. Hierzu sind zum einen die Eingriffsfinger 12 des Kupplungseinsatzes 5 in ihrem Ausgangszustand in einer gegenüber dem restlichen Korpus des Kupplungseinsatzes vorspringenden Stellung fixiert, und zwar durch Soll-Bruchstellen bzw. Soll-Bruchstücke 23. Wie Figur 13 zeigt, sind zwischen dem hülsenförmigen Korpus und den Eingriffsfingern 12 Materialstege 60 stehen gelassen worden, die die U-förmigen, schlitzförmigen Einschnitte um die Eingriffsfinger 12 herum überbrücken. Die Rasthaken 11 an den Eingriffsfingern 12 sind dabei derart ausgebildet und angeordnet, dass sie mit ihrer Innenumfangsfläche eine Klemmfläche bilden, die passgenau auf die zylindrische Umfangsfläche des Verbindungsstücks 34 des Zahnbürstenhandteils 4 aufschiebbar ist. Die Eingriffsfinger 12 sind dabei von den Rasthaken 11 anfangend vorteilhafterweise mit ihrer Innenumfangskontur leicht konisch ausgebildet, so dass der am Stirnende vorgesehene Mantelflächenabschnitt des Verbindungsstücks 34 des Zahnbürstenhandteils 4 ebenfalls geklemmt werden kann, vgl. Figur 11.

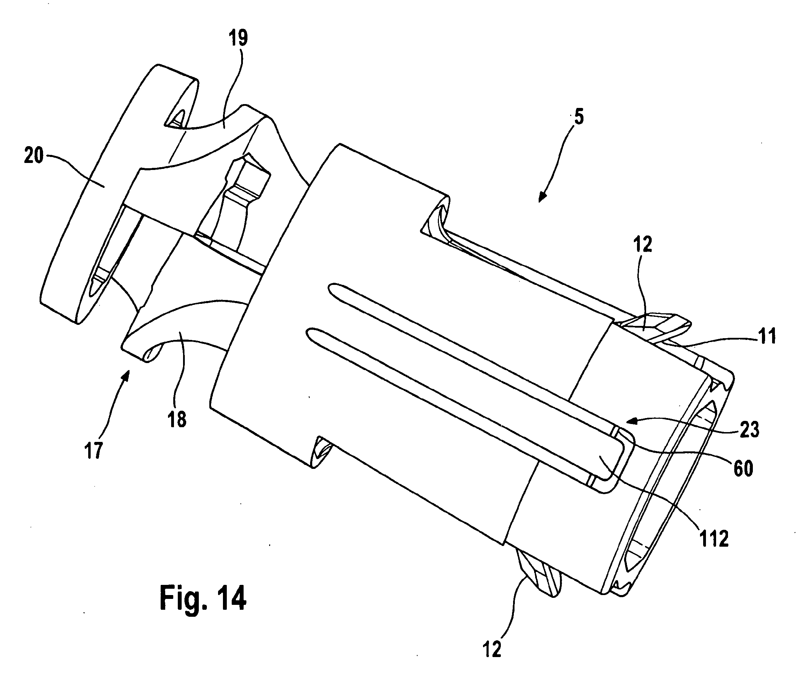

Wie Figur 13 und 14 zeigen, sind vorteilhafterweise zwei weitere Eingriffsfinger 112 gegenüber den Eingriffsfingern 12 um jeweils 90° versetzt an dem Kupplungseinsatz 5 vorgesehen, die ebenfalls durch U-förmige, schlitzförmige Einschnitte in dem hülsenförmigen Korpus des Kupplungseinsatzes 5 von letzterem abgegrenzt sind. Dabei sind jedoch ebenfalls Soll-Bruchstücke 23 in Form von stehen gelassenen Materialstegen 60 vorgesehen, die diese Eingriffsfinger 112 ebenfalls in eine nach innen vorspringende Stellung zwingen, die in Figur 13 dargestellt ist. In entsprechender Weise definieren diese weiteren Eingriffsfinger 112 mit ihrer Innenmantelfläche Passflächen, die auf die Außenumfangsfläche des Verbindungsstücks 34 des Zahnbürstenhandteils 4 passgenau, insbesondere reib- und/oder klemmschlüssig, aufgeschoben werden können.

Durch diese Ausbildung kann der Kupplungseinsatz 5 auch auf einem zylindrischen Verbindungsstück 14 passgenau fixiert werden. Soll hingegen der Kupplungseinsatz 5 auf ein konisches Verbindungsstück 34 eines entsprechenden Zahnbürstenhandteils 4, wie es Figuren 1 und 2 zeigen, aufgeschoben werden, brechen die Soll-Bruchstücke 23 jeweils auf, wodurch die Eingriffsfinger 12 und 112 nach außen federn können, wodurch die gesamte Innenumfangsfläche des hülsenförmigen Korpus des Kupplungseinsatzes 5 als Aufnahme 13 fungieren kann, in die das konische Verbindungsstück des Zahnbürstenhandteils 4 passgenau eingesetzt werden kann. Die Eingriffsfinger 12 bewirken dabei dann die Verrastung, wie dies im Zusammenhang mit den Figuren 1 bis 3 beschrieben wurde.

## Patentansprüche

1. Aufsatzteil für eine Zahnbürste, mit einem Arbeitskopf (2) sowie einem mit dem Arbeitskopf (2) verbundenen, rohrförmigen Anschlussstück (3), das auf ein Zahnbürstenhandteil (4) aufsetzbar ist, wobei in dem Anschlussstück (3) ein Kupplungseinsatz (5) mit zumindest einem Eingriffsabschnitt (6) zur form- und/oder reibschlüssigen Verriegelung mit dem Zahnbürstenhandteil (4) vorgesehen ist, **dadurch gekennzeichnet, dass** der Kupplungseinsatz (5) relativ zu dem Anschlussstück (3) und/oder einem damit verbundenen Betätigungsstück (7) axial in Aufsatzteillängsrichtung verschiebbar ist und mit dem Eingriffsabschnitt (6) verbunden ist derart, dass eine axiale Bewegung des Kupplungseinsatzes (5) relativ zum Anschlussstück (3) und/oder Betätigungsstück (7) eine Entriegelungs- und/oder Verriegelungsbewegung des Eingriffsabschnitts (6) quer zur Aufsatzteillängsrichtung erzeugt.

2. Aufsatzteil nach dem vorhergehenden Anspruch, wobei das Betätigungsstück (7) einen Entriegelungsabschnitt (8) besitzt, der derart angeordnet und ausgebildet ist, dass bei einer Axialbewegung des Kupplungseinsatzes (5) von dem Arbeitskopf (2) weg der Entriegelungsabschnitt (8) mit dem Kupplungseinsatz (5) in Eingriff bringbar ist und dessen Eingriffsabschnitt (6) in eine entriegelte Stellung zwingt.

3. Aufsatzteil nach einem der vorhergehenden Ansprüche, wobei an dem Eingriffsabschnitt (6) und dem Betätigungsstück (7) ein Schrägflächenpaar (9, 10) vorgesehen ist, das beim Auflaufen des Eingriffsabschnitts (6) auf das Betätigungsstück (7) die Ent- und/oder Verriegelungsbewegung erzeugt.

4. Aufsatzteil nach einem der vorhergehenden Ansprüche, wobei der Eingriffsabschnitt (6) eine Rastkontur, insbesondere einen Rasthaken (11), aufweist, die am auskragenden Ende eines federnd ausgebildeten und/oder um eine Querachse schwenkbaren Eingriffsfinger (12) vorgesehen ist und von dem Betätigungsstück (7) radial bewegbar ist.

5. Aufsatzteil nach einem der Ansprüche 1 bis 3, wobei der Eingriffsabschnitt (6) eine Rastkontur, insbesondere einen Rasthaken (11), aufweist, die an einem Schwenkarm (24) angelenkt ist, der um eine zur Aufsatzteillängsachse querverlaufenden Querachse schwenkbar ist derart, dass eine Axialbewegung der am Schwenkarm (24) angelenkten Rastkontur von dem Arbeitskopf (2) weg mit einer Radialkomponente zu einer entriegelten Stellung hin überlagert wird.

6. Aufsatzteil nach einem der Ansprüche 1 bis 3, wobei der Eingriffsabschnitt (6) einen radial aufweitbaren und verjüngbaren Rastring (25) aufweist, der eine Keilfläche (9) aufweist und/oder von einer Keilfläche (10) an dem Betätigungsstück (7) bei axialem Auflaufen in Aufsatzteillängsrichtung von dem Betätigungsstück (7) radial aufweitbar ist.

7. Aufsatzteil nach einem der Ansprüche 1 bis 3, wobei der Kupplungseinsatz (5) mehrere Schalensegmente (26, 27) umfasst, die gemeinsam eine Aufnahme für einen Verbindungsabschnitt des Zahnbürstenhandteils (4) bilden und in einer konischen Aufnahme in dem Anschlussstück (3) sitzen derart, dass je nach axialer Stellung der Schalensegmente (26, 27) relativ zu dem Anschlussstück (3) die genannten Schalensegmente (26, 27) unterschiedliche Durchmesser bezüglich der genannten Aufnahme für das Verbindungsstück des Zahnbürstenhandteils (4) definieren.

8. Aufsatzteil nach einem der vorhergehenden Ansprüche, wobei der Eingriffsabschnitt (6) einen Rastklips und/oder einen Schnapper bildet, der beim Aufstecken des Anschlussstücks (3) auf das Zahnbürstenhandteil (4) über dessen Verbindungsstück gleitet, dabei elastisch wegfedert und bei Erreichen der gänzlich aufgesteckten Stellung formschlüssig einschnappt.

9. Aufsatzteil nach einem der vorhergehenden Ansprüche, wobei der Kupplungseinsatz (5) eine Hülse bildet, an deren Umfangswandung der zumindest eine Eingriffsabschnitt (6) vorgesehen ist.

10. Aufsatzteil nach einem der vorhergehenden Ansprüche, wobei in dem Anschlussstück (3) eine Einsatzausnehmung (16) vorgesehen ist, in der der Kupplungseinsatz (5) in zumindest einer axialen Stellung passgenau sitzt und umschlossen ist.

11. Aufsatzteil nach einem der vorhergehenden Ansprüche, wobei an dem Kupplungseinsatz (5) ein elastischer Federabschnitt (18, 19) angeformt ist, der an dem rohrförmigen Anschlussstück (3) befestigt ist und den Kupplungseinsatz (5) beweglich in dem Anschlussstück (3) hält.

12. Aufsatzteil nach einem der vorhergehenden Ansprüche, wobei das Betätigungsstück (7) als Ring ausgebildet ist, der in das Anschlussstück (3) eingesetzt ist, und/oder axial im wesentlichen in Aufsatzteillängsrichtung vorspringende Betätigungsfinger (21) aufweist.

13. Aufsatzteil nach einem der vorhergehenden Ansprüche, wobei das Betätigungsstück (7) einen axial in Aufsatzteillängsrichtung verschiebbaren Schieber (22) umfasst.

14. Aufsatzteil nach einem der vorhergehenden Ansprüche, wobei der zumindest eine Eingriffsabschnitt (6) in einem Ausgangszustand mittels eines Soll-Bruchstücks (23) in einer vorbestimmten Ausgangslage gegenüber dem restlichen Korpus des Kupplungseinsatzes (5) fixiert ist und zusammen mit dem restlichen Korpus des Kupplungseinsatzes (5) eine Aufnahme definiert, in die ein zylindrisches und/oder leicht konisches Verbindungsstück (14) eines ersten Zahnbürstenhandteils passgenau einsteckbar und festklemmbar ist und in die ein stärker konisches Verbindungsstück (14) eines zweiten Zahnbürstenhandteils nur unter Aufbrechen des Soll-Bruchstücks (23) und Aufweiten des Eingriffsabschnitts (5) passgenau einsteckbar ist.

15. Aufsatzteil nach einem der vorhergehenden Ansprüche, wobei eine Aufsteckwelle (29) insbesondere in dem Anschlussstück (3) vorgesehen ist, die eine Kupplungskontur (30) zur formschlüssigen Kupplung mit einer in dem Zahnbürstenhandteil (4) vorgesehenen Antriebswelle (31) besitzt, wobei die Kupplungskontur (30) eine konische Passfläche (32) aufweist.

16. Zahnbürste mit einem Aufsatzteil nach einem der vorhergehenden Ansprüche 1 bis 15.

## Claims

1. An attachment element, for a toothbrush having an operating head (2) and a tubular adapter element (3) connected to the operating head (2), which adapter element is attachable to a toothbrush handle (4), wherein a coupling insert (5) is provided in the adapter element (3), having at least one engaging segment (6) for form-interlockingly and/or frictionally locking to the toothbrush handle; **characterized in that** the coupling insert (5) is axially movable in the longitudinal direction of the attachment element relative to the adapter element (3) and/or relative to an actuating element (7) connected thereto and is connected with the engaging segment (6) such that an axial movement of the coupling insert (5) relative to the adapter element (3) and/or the actuating element (7) results in an unlocking or locking movement of the engaging segment (6) transversely to the longitudinal direction of the attachment element.

2. The attachment element according to the preceding claim, wherein the actuating element (7) has an unlocking region (8) which is disposed and formed such that with an axial movement of the coupling insert (5) in a direction away from the operating head (2) the unlocking region (8) can be brought into engagement with the coupling insert (5) forcing the engaging segment thereof into an unlocked position.

3. The attachment element according to any one of the preceding claims, wherein a pair of inclined surfaces (9, 10) is provided on the engaging segment (6) and the actuating element (7), which pair of inclined surfaces produces the unlocking and/or locking movement when the engaging segment (6) comes into contact with the actuating element (7).

4. The attachment element according to any one of the preceding claims, wherein the engaging segment (6) has a catch contour, particularly a catch hook (11), provided on the projecting end of a engaging finger (12) that is spring-loaded and/or is pivotable around a transverse axis, and is radially movable by the actuating element (7).

5. The attachment element according to any one of claims 1 to 3, wherein the engaging segment (6) has a catch contour, particularly a catch hook (11), pivotably mounted on a pivot arm (24) which is pivotable around a transverse axis oriented transversely to the longitudinal axis of the attachment element, such that an axial movement of the catch contour that is pivotably mounted on the pivot arm (24) in the direction away from the operating head (2) will have a radial component which is converted into an unlocked position.

6. The attachment element according to any one of claims 1 to 3, wherein the engaging segment (6) has a radially expandable and contractable catch ring (25) which has an inclined surface (9) and/or is radially expandable by an inclined surface (10) on the actuating element (7) when the catch ring comes into contact with the actuating element (7) during axial movement in the longitudinal direction of the attachment element.

7. The attachment element according to any one of claims 1 to 3, wherein the coupling insert (5) comprises multiple shell segments (26, 27) which together form an accommodating element for a connecting segment of the toothbrush handle (4) and are disposed in a conical recess in the adapter element (33), such that depending on the axial positioning of the shell segments (26, 27) relative to the adapter element (3) the aforementioned shell segments (26, 27) define different diameters with regard to the recess for the connecting element of the toothbrush handle (4).

8. The attachment element according to any one of the preceding claims, wherein the engaging segment (6) forms a locking clip and/or a snapper which, when the adapter element (3) is pushed onto the toothbrush handle (4), slides over the connecting element thereof in a manner such that the engaging segment is elastically pushed away, and when the completely pushed-on state is reached the engaging segment then snaps into a form-interlocking state.

9. The attachment element according to any one of the preceding claims, wherein the coupling insert (5) forms a sleeve, and at least one engaging segment (6) is provided at the peripheral walls of the sleeve.

10. The attachment element according to any one of the preceding claims, wherein an accommodation configuration (16) is provided in the adapter element (3), in which accommodation configuration the coupling insert (5) sits and is surrounded in a fitted manner in at least one axial position.

11. The attachment element according to any one of the preceding claims, wherein an elastic spring segment (18, 19) is formed on the coupling insert (5), which spring segment is fixed to the tubular adapter element (3) and serves to retain the coupling insert (5) movably in the adapter element (3).

12. The attachment element according to any one of the preceding claims, wherein the actuating element (7) is in the form of a ring, which is installed in the adapter element (3), and/or has actuating fingers (21) which project axially essentially in the longitudinal direction of the attachment element.

13. The attachment element according to any one of the preceding claims, wherein the actuating element (7) has a slide (22), which can be displaced in the longitudinal direction of the attachment element.

14. The attachment element according to any one of the preceding claims, wherein the at least one engaging segment (6) in an initial state is fixed by a predetermined breaking element (23) in a predetermined initial position with respect to the rest of the body of the coupling insert (5), and together with the rest of the body of the coupling insert (5) defines a recess into which a cylindrical or slightly conical connecting member (14) of a first toothbrush handle can be inserted with a good fit and fixedly clamped; and further into which recess a more strongly conical connecting member (14) of a second toothbrush handle can be inserted also with a good fit, but only with breaking of the predetermined breaking element (23) and widening of the engaging segment (5).

15. The attachment element according to any one of the preceding claims, wherein an extension shaft (29) is provided, particularly in the adapter element (3), which extension shaft (29) has a coupling contour (30) for form-interlocking coupling with a drive shaft (31) provided in the toothbrush handle (4), wherein the coupling contour (30) has a conical fitting surface (32).

16. A toothbrush with an attachment element according to any one of the preceding claims 1 to 15.

## Revendications

1. Pièce embout, en particulier formant brosse, pour une brosse à dents, de préférence électrique, avec une tête active (2) ainsi qu'un élément de raccordement (3) tubulaire relié à la tête active (2), pouvant être placée sur une partie poignée de la brosse à dents (4), dans laquelle un insert d'accouplement (5), de préférence en forme de douille, doté d'au moins une section d'engrènement (6) pour le verrouillage par complémentarité de forme ou par friction avec la partie poignée de la brosse à dents (4), est prévu dans l'élément de raccordement (3), **caractérisée en ce que** l'insert d'accouplement (5) peut coulisser par rapport à l'élément de raccordement (3) et/ou un élément d'actionnement (7) relié à celui-ci dans le sens axial dans la direction longitudinale de la pièce embout et relié à la section d'engrènement (6) de telle sorte qu'un mouvement axial de l'insert d'accouplement (5) par rapport à l'élément de raccordement (3) et/ou l'élément d'actionnement (7) produit un mouvement de verrouillage et/ou de déverrouillage de la section d'engrènement (6) transversalement à la direction longitudinale de la pièce embout.

2. Pièce embout selon la revendication précédente, dans laquelle l'élément d'actionnement (7) possède une section de déverrouillage (8), qui est placée et formée de sorte que, lors d'un mouvement axial de l'insert d'accouplement (5) en s'éloignant de la tête active (2), la section de déverrouillage (8) peut venir se mettre en prise avec l'insert d'accouplement (5) et déplacer sa section d'engrènement (6) vers une position déverrouillée.

3. Pièce embout selon une des revendications précédentes, dans laquelle une paire de surfaces obliques (9, 10) est prévue sur la section d'engrènement (6) et l'élément d'actionnement (7), qui produit le mouvement de déverrouillage et/ou de verrouillage lors du passage de la section d'engrènement (6) sur l'élément d'actionnement (7).

4. Pièce embout selon une des revendications précédentes, dans laquelle la section d'engrènement (6) présente un profil d'encliquetage, en particulier un crochet d'encliquetage (11), qui est prévu sur l'extrémité en saillie d'un doigt d'engrènement (12) pivotant autour d'un axe transversal et/ou formé élastique et peut être déplacé dans le sens radial par l'élément d'actionnement (7).

5. Pièce embout selon une des revendications 1 à 3, dans laquelle la section d'engrènement (6) présente un profil d'encliquetage, en particulier un crochet d'encliquetage (11), qui est articulé sur un bras pivotant (24), qui peut pivoter autour d'un axe transversal orienté de manière transversale par rapport à l'axe longitudinal de la pièce embout, de telle sorte qu'un mouvement axial du profil d'encliquetage articulé sur le bras pivotant (24) en s'éloignant de la tête active (2) se superpose à un composant radial vers une position déverrouillée.

6. Pièce embout selon une des revendications 1 à 3, dans laquelle la section d'engrènement (6) présente une bague d'arrêt (25) pouvant se rétrécir et s'élargir dans le sens radial, qui présente une surface de coin (9) et/ou qui peut s'élargir dans le sens radial depuis une surface de coin (10) sur l'élément d'actionnement (7) lors du passage axial dans la direction longitudinale de la pièce embout de l'élément d'actionnement (7).

7. Pièce embout selon une des revendications 1 à 3, dans laquelle l'insert d'accouplement (5) comprend plusieurs segments de coque (26, 27), qui forment ensemble une réception pour une section de raccordement de la partie poignée de la brosse à dents (4) et qui sont situées dans une réception conique dans l'élément de raccordement (3) de telle sorte que selon la position axiale des segments de coque (26, 27) par rapport à l'élément de raccordement (3), lesdits segments de coque (26, 27) définissent un diamètre différent par rapport à ladite réception pour l'élément de raccordement de la partie poignée de la brosse à dents (4).

8. Pièce embout selon une des revendications précédentes, dans laquelle la section d'engrènement (6) forme une lèvre d'encliquetage et/ou un cliquet, qui glisse lors de la fixation de l'élément de raccordement (3) sur la partie poignée de la brosse à dents (4) sur son élément de raccordement, est ainsi rappelée de manière élastique et s'encliquète par complémentarité de forme lorsqu'elle atteint la position entièrement insérée.

9. Pièce embout selon une des revendications précédentes, dans laquelle l'insert d'accouplement (5) forme une douille, sur la paroi circonférentielle de laquelle est prévue la au moins une section d'engrènement (6).

10. Pièce embout selon une des revendications précédentes, dans laquelle, dans l'élément de raccordement (3), un évidement pour insert (16) est prévu, dans lequel l'insert d'accouplement (5) est logé et enserré précisément dans au moins une position axiale.

11. Pièce embout selon une des revendications précédentes, dans laquelle, sur l'insert d'accouplement (5) est formée une section de ressort élastique (18, 19), fixée sur l'élément de raccordement tubulaire (3) et supportant l'insert d'accouplement (5) mobile dans l'élément de raccordement (3).

12. Pièce embout selon une des revendications précédentes, dans laquelle l'élément d'actionnement (7) est formé comme une bague, qui est placée dans l'élément de raccordement (3) et/ou présente un doigt d'actionnement (21) en saillie dans le sens axial, essentiellement dans la direction longitudinale de la pièce embout.

13. Pièce embout selon une des revendications précédentes, dans laquelle l'élément d'actionnement (7) comprend un élément coulissant (22) pouvant coulisser dans le sens axial dans la direction longitudinale de la pièce embout.

14. Pièce embout selon une des revendications précédentes, dans laquelle la au moins une section d'engrènement (6) est fixée dans un état initial au moyen d'un fragment de consigne (23) dans un emplacement initial prédéfini contre le corps restant de l'insert d'accouplement (5) et définit, conjointement avec le corps restant de l'insert d'accouplement (5) une réception, dans laquelle un élément de raccordement (14) cylindrique et/ou légèrement conique d'une première partie poignée de brosse à dents peut être inséré et serré précisément et dans laquelle un élément de raccordement (14) de forme plus conique d'une deuxième partie poignée de la brosse à dents ne peut être inséré précisément que lors de la rupture du fragment de consigne (23) et l'élargissement de la section d'engrènement (5).

15. Pièce embout selon une des revendications précédentes, dans laquelle un arbre d'insertion (29) est prévu en particulier dans l'élément de raccordement (3), qui possède un profil d'accouplement (30) pour l'accouplement par complémentarité de forme avec un arbre d'entraînement (31) prévu dans la partie poignée de la brosse à dents (4), le contour d'accouplement (30) possédant une surface conique correspondante (32).

16. Brosse à dents contenant une pièce embout selon une des revendications précédentes 1 à 15.
